# EUROPEAN PATENT SPECIFICATION

(11) **EP 4 123 164 B1**
(45) Date of publication and mention of the grant of the patent: **14.02.2024**
(21) Application number: 22186179.2
(22) Date of filing: 21.07.2022
(51) Int. Cl.: F03D 3/06

(54) **VERTICAL AXIS WIND TURBINE**
WINDTURBINE MIT VERTIKALER ACHSE
ÉOLIENNE À AXE VERTICAL

(30) Priority: 23.07.2021 IT 202100019625
(43) Date of publication of application: 25.01.2023
(73) Proprietor: Revotek S.r.l., 24062 Costa Volpino (BG) (IT)
(72) Inventor: Barcellini, Stefano, 24060 Solto Collina (BG) (IT); Pezzotti, Andrea, 24060 Riva di Solto (BG) (IT)
(74) Representative: De Bortoli, Tiziano

(56) References cited:
- EP-A1- 3 702 610
- DE-A1-102012 019 268
- KR-A- 20120 131 804

## Description

### Technical field of the invention

The present invention concerns, in general, the technical field of wind turbines. More specifically, the present invention concerns a vertical axis wind turbine provided with a system for varying the geometry of the blades, so as to increase the conversion efficiency of the kinetic energy of the wind into mechanical energy for subsequent conversion into electric energy by a generator.

### Background of the invention

A wind turbine is an electro-mechanical machine built to exploit/convert the kinetic energy of the wind, or wind energy, into electric energy via the use of a rotor comprising two or more blades.

The production of electric energy by a wind turbine passes through a first phase, in which the kinetic energy of the air mass is converted into mechanical energy of the blades, and a second phase, in which the mechanical energy of the blades is converted into electric energy by a generator.

Wind turbines are usually classified into Horizontal Axis Wind Turbines (HWAT) and Vertical Axis Wind Turbines (VAWT), with reference to the blade rotation axis, which can be parallel or perpendicular to the ground.

Horizontal axis wind turbines were the first to be exploited in history (they were used, for example, to drive windmills or water pumping systems) and are still the most widely used. They typically comprise a support tower, a rotor, which is formed of a plurality of blades (usually three blades), a hub and a shaft, and a nacelle, which contains a generator, a gearbox and one or more control devices.

Horizontal axis wind turbines can be either upwind, in which case the wind encounters the rotor before the tower, or downwind. Upwind turbines offer greater efficiency since there is no aerodynamic interference with the tower but, on the other hand, they have the drawback of not being self-aligning with respect to the wind direction and therefore require a directional fin or a yaw system. Downwind turbines, on the other hand, are negatively affected by the interaction between tower and rotor, but they are intrinsically self-aligning and can use a flexible rotor to withstand strong winds.

Horizontal axis wind turbines have a high wind to electric energy conversion efficiency. Furthermore, they operate with a very low torque and this contributes significantly to improving the overall reliability of the moving parts.

Vertical axis wind turbines, although less widely known than horizontal axis wind turbines (in fact they account for 1% of the total number of turbines installed worldwide), are more suited to installation in urban settings for two main reasons: they are able to extract energy from the wind regardless of its direction and they have a more limited visual and acoustic impact compared to horizontal axis wind turbines.

The reduced number of moving parts present in the structure gives this type of wind generator high resistance to strong gusts of wind and, compared to horizontal axis wind turbines, they also have the considerable advantage that all the mechanical and control equipment is on the ground, thus permitting easy installation and maintenance.

However, the intensity of the wind at ground level is lower than the speed of the same wind current at altitude and, simultaneously, the turbulence intensity is higher. This results in less energy available for conversion by the rotor into power available to the rotation shaft.

The lower efficiency of vertical axis wind turbines compared to the horizontal axis technology has greatly limited the diffusion of this type of wind turbine; however, the optimization of these machines and their ability to work also with light (below 4 m/s) and turbulent winds means that they can operate for longer than the horizontal axis wind turbines, covering a wide range of hours of wind/day.

Vertical axis wind turbines are classified into three different types: Savonius, Darrieus and Darrieus-Savonius.

A Savonius turbine is a "resistance" type vertical axis wind turbine, comprising two or four semi-cylindrical vertical blades which are fixed, opposite one another, to a shaft. When the wind impacts one of the semi-cylindrical blades, it rotates the shaft. In this way, while the confined flow that strikes a semi-cylindrical blade decreases, the opposite semi-cylindrical blade sees an increase in said confined flow. In other words the blades encounter less resistance when they move against the wind than when they move with the wind and this difference in resistance causes rotation of the turbine.

The main drawback of said type of wind generator is that of having a half-cylinder moving against the wind, which limits the torque that can be produced, with consequent reduction in performance.

The Darrieus turbines are "lift" type vertical axis wind turbines, in which the surfaces of the blades arranged in the direction of the wind have a wing profile able to generate a different pressure distribution along the blade and therefore a torque available to the rotation axis. Compared to the Savonius turbine, the Darrieus turbine offers greater efficiency because it limits friction losses. However, the Darrieus turbine is not able to start up independently since, regardless of the wind speed, the starting torque is null. This type of turbine therefore requires an auxiliary device.

A possible solution is represented by the hybrid Darrieus-Savonius turbine, in which the starting torque is provided by the Savonius turbine, coaxial with and internal to the Darrieus turbine. From the above, it can be seen that, despite their numerous advantages, vertical axis wind turbines have the drawback of having a limited conversion efficiency of the wind energy into electric energy, which can be up to 50% lower than the conversion efficiency of horizontal axis wind turbines. Examples of prior art solutions are available in documents EP 3 702 610 A1 , KR 2012 0131804 A, DE 10 2012 019268 A1.

### Summary of the invention

The main object of the present invention is therefore to provide a vertical axis wind turbine configured so as to increase the conversion efficiency of the wind energy into electric energy. A further object of the present invention is to provide a vertical axis wind turbine configured to self-align with respect to the direction of the wind.

A further object of the present invention is to provide a vertical axis wind turbine, the blades of which withstand the wind that impacts on them, without being damaged over time.

Yet another object of the present invention is to provide a vertical axis wind turbine configured so as to present a solid structure and therefore able to operate also in conditions of high intensity wind.

Last but not least, a further object of the present invention is to provide a vertical axis wind turbine with a simplified structure, so as to limit production and maintenance costs.

These and other objects of the present invention are achieved by a vertical axis wind turbine incorporating the characteristics of the attached claims, which form an integral part of the present description.

The invention therefore concerns a vertical axis wind turbine comprising a support base, a shaft extending centrally from the support base, a support frame for a plurality of blades, mounted on the base rotatable with the shaft, and a control frame for the plurality of blades, mounted on the shaft, above the blade support frame. Each blade of the plurality of blades comprises a first half-blade and a second half-blade supported by the blade support frame.

The turbine is characterized in that the blade control frame comprises a control element mounted rotatable on the shaft, a pin extending from the control element in an eccentric position with respect to the shaft, a plurality of connecting rods, one for each blade, rotatably supported by the pin, and a directional deflector extending from the pin and rotatable integrally with it, and in that each blade comprises a fixed rod associated with the blade support frame and a mobile rod having an end sliding on the blade support frame and another end associated with a respective connecting rod of the blade control frame.

During the rotation of the turbine, the directional deflector angles toward the direction of the wind flow, thereby fixing an angular position of the pin with respect to the shaft, and the mobile rod of each blade rotates following a trajectory, eccentric with respect to a trajectory of the fixed rod, sliding on the blade support frame and thus causing opening and closing of the blades. Due to this combination of characteristics, the vertical axis wind turbine according to the invention increases the conversion efficiency of the kinetic energy of the wind into mechanical energy of the blades. In fact, due to the presence of the deflector, which fixes the position of the rotation axis of the blade control frame with respect to the rotation axis of the blade support frame, during rotation of the wind turbine, the blade control frame is always in the position of maximum efficiency, namely with the blade exposed in the direction of the wind flow in the maximum opening position, so as to receive maximum thrust, and the other blades in the intermediate opening or maximum closing position, so as to oppose minimum resistance to the wind flow. It follows that the torsional moment is always greater than the resisting moment, with consequent increase in the efficiency of the wind turbine.

Furthermore, the vertical axis wind turbine according to the invention is able to self-align according to the direction of the wind flow. In fact, as the direction of the wind flow varies, the directional deflector modifies its position and, consequently, fixes a new position of the pin of the blade control frame with respect to the position of the turbine shaft. In this way, the blade control frame is again in the position of maximum efficiency, namely with the blade exposed in the direction of the wind flow in the maximum opening position, so as to receive maximum thrust, and the other blades in the intermediate opening or maximum closing position, so as to oppose minimum resistance to the wind flow.

In one embodiment, the first half-blade and the second half-blade of each blade are juxtaposed between each other, the first half-blade being radially internal and the second half-blade being radially external.

In one embodiment, the blade support frame comprises a lower rod structure and an upper rod structure, identical to each other, wherein the lower rod structure is mounted on the shaft near the base and the upper rod structure is mounted at a free end of the shaft, with homologous parts facing each other.

In one embodiment, the lower rod structure comprises a hub, which is keyed onto the shaft and from which rods extend, connected to one another by reinforcing rods, and the upper rod structure comprises a hub, which is keyed onto the shaft and from which rods extend, connected to one another by reinforcing rods.

In one embodiment, the fixed rod is fixed to the first half-blade of each blade at a lateral surface opposite to that of juxtaposition with the second half-blade, while the mobile rod is fixed to the second half-blade at a lateral surface opposite to that of juxtaposition with the first half-blade. In one embodiment, the fixed rod of each blade has a lower end rotatably mounted on the lower rod structure of the blade support frame and an upper end rotatably mounted on the upper rod structure of the blade support frame.

In one embodiment, the mobile rod of each blade has a lower end provided with a carriage sliding in a guide formed in the lower rod structure of the blade support frame, the other end rotatably mounted at an end of the respective connecting rod of the blade control frame and carries a further carriage sliding in a guide formed in the upper rod structure of the blade support frame.

In one embodiment, the plurality of blades comprises three blades arranged at 120° from one another.

In one embodiment, the trajectory followed by the fixed rods of the blades is concentric to a trajectory followed by radially outermost portions of the lower rod structure and the upper rod structure of the blade support frame.

In one embodiment, the trajectories are circular.

### Brief description of the drawings

Further characteristics and advantages of the present invention will become clearer from the following detailed description of a preferred embodiment thereof, provided below, for indicative and non-limiting purposes, with reference to the attached drawings. In the drawings:
- Figure 1 is a perspective view of a vertical axis wind turbine according to a preferred embodiment of the present invention;
- Figure 2 is a front view of the wind turbine of Figure 1, in a first operating condition;
- Figure 3 is a plan view of the wind turbine of Figure 2;
- Figure 4 is a front view of the wind turbine of Figure 1, in a second operating condition;
- Figure 5 is a plan view of the wind turbine of Figure 4;
- Figure 6 is a front view of the wind turbine of Figure 1, in a third operating condition;
- Figure 7 is a plan view of the wind turbine of Figure 6;
- Figure 8 is a front view of the wind turbine of Figure 1, in a fourth operating condition;
- Figure 9 is a plan view of the wind turbine of Figure 8;
- Figure 10 is a front view, similar to that of Figure 2, with the directional deflector angled according to a different wind flow direction; and
- Figure 11 is a plan view of the wind turbine of Figure 10.

### Detailed description of a preferred embodiment of the invention

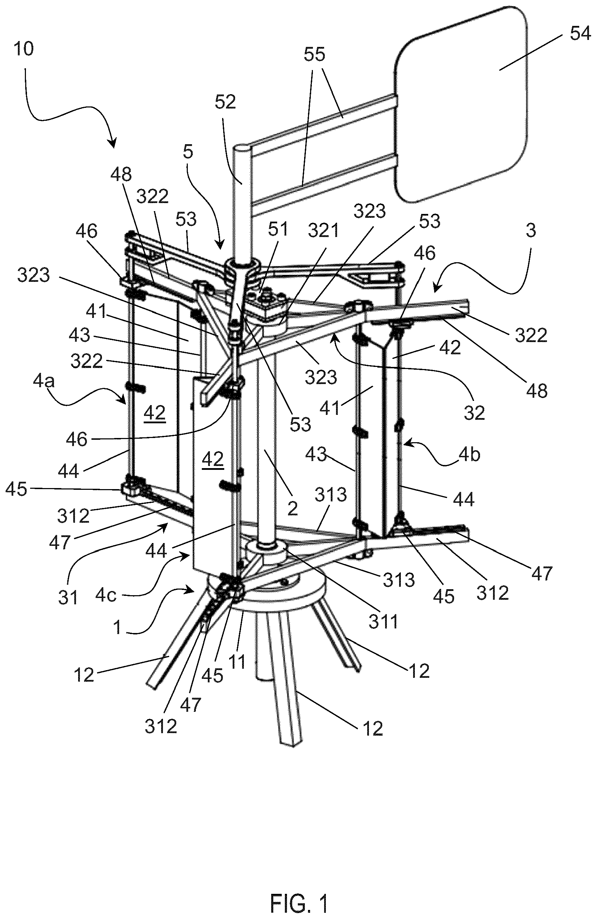

With reference to Figure 1, it illustrates a vertical axis wind turbine according to a preferred embodiment of the present invention.

The turbine, indicated in general by the reference number 10, comprises a ground supporting base 1, comprising a support surface 11 and a plurality of feet 12, and a rotating shaft 2, which extends from the support surface 11 of the base 1, centrally to it.

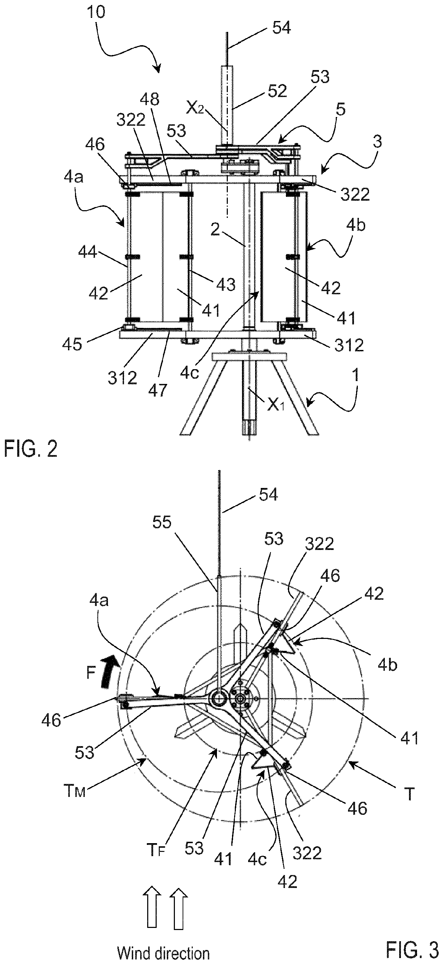

The base 1 sustains a support frame 3 for a plurality of blades, preferably three blades 4a, 4b, 4c, wherein the frame rotates with the shaft 2, with respect to the base 1, around a rotation axis X₁ shown in Figure 2.

In particular, the blade support frame 3 comprises a lower rod structure 31 and an upper rod structure 32, equal to each other. The lower rod structure 31 is mounted on the shaft 2 near the base 1 and the upper rod structure 32 is mounted at a free end of the shaft 2, with homologous parts of the lower rod structure 31 and upper rod structure 32 facing one another.

The lower rod structure 31 comprises a hub 311, which is keyed onto the shaft 2 and from which rods 312 extend, preferably connected two by two by respective reinforcing rods 313. In the embodiment illustrated, the lower rod structure 31 comprises three rods 312, which extend from the hub 311 and are arranged substantially at 120° from one another, and three reinforcing rods 313.

Analogously to the lower rod structure 31, the upper rod structure 32 comprises a hub 321, which is keyed onto the shaft 2 and from which rods 322 extend, preferably connected two by two by respective reinforcing rods 323. In the embodiment illustrated, the upper rod structure 32 comprises three rods 322, which extend from the hub 321 and are arranged substantially at 120° from one another, and three reinforcing rods 323.

Respective blades 4a, 4b, 4c are mounted between corresponding pairs of rods 312 and 322 of the lower rod frame 31 and the upper rod frame 32.

Each blade 4a, 4b, 4c is preferably flat and made of rigid or semi-rigid material, for example metal, and comprises a first half-blade 41, radially internal with reference to the shaft 2, and a second half-blade 42, radially external with reference to the shaft 2, juxtaposed between each other. As will be described in detail below, each blade 4a, 4b, 4c is movable on the blade support frame 3 between a maximum opening condition, in which the respective half-blades 41 and 42 are radially aligned, and a closing condition, in which the half-blades are folded over each other and substantially overlapped.

Each first half-blade 41 is fixed, at a lateral surface opposite that of juxtaposition with the second half-blade 42, namely a lateral surface radially nearer the shaft 2, to a fixed rod 43, which extends between the lower rod structure 31 and the upper rod structure 32 of the blade support frame 3, parallel to the shaft 2 of the turbine 10.

More specifically, each fixed rod 43 has a lower end rotatably mounted, for example by means of roller bearings, on the lower rod structure 31 of the blade support frame 3 at the area of intersection between a respective rod 312 and the reinforcing rods 313 connected to it, and an upper end rotatably mounted, for example by means of roller bearings, on the upper rod structure 32 of the blade support frame 3 at the area of intersection between a respective rod 322 and the second reinforcing rods 323 connected to it.

Each second half-blade 42 is fixed, at a lateral surface opposite that of juxtaposition with the first half-blade 41, namely a lateral surface radially farther from the shaft 2, to a mobile rod 44, which extends between the frame parallel to the shaft 2 of the turbine 10.

More specifically, each mobile rod 44 has a lower end provided with a carriage 45 sliding in a guide 47 obtained in the respective rod 312 of the lower rod structure 31 of the blade support frame 3, between the free end of the rod 312 and the area of intersection of the rod 312 with the reinforcing rods 313.

Furthermore, each mobile rod 44 carries a further carriage 46 sliding in a guide 48 formed in the respective rod 322 of the upper rod structure 32 of the blade support frame 3, between the free end of the rod 322 and the area of intersection of the rod 322 with the reinforcing rods 323. The turbine 10 further comprises a blade control frame 5, which is mounted above the blade support frame 3, offset with respect to it.

In particular, the blade control frame 5 comprises a control element 51, mounted on the shaft 2 of the turbine 10 immediately above the upper rod structure 32 of the blade support frame 3. From the control element 51, in a position eccentric to the shaft 3, a pin 52 extends, which supports a plurality of connecting rods 53, one for each blade 4a, 4b, 4c of the turbine 10, the connecting rods 53 being rotatable around an axis X₂ of the pin 52, shown in Figure 2. At a free end of each connecting rod 53, an upper end of the mobile rod 44 of the respective blade 4a, 4b, 4c is fixed.

From the pin 52 a directional deflector 54 further extends, which is connected to the pin 52 by means of arms 55.

As will be described in detail below, the directional deflector 54 is configured to angle according to the wind flow direction and fixes the reciprocal position between the axis X₁ of the shaft 2 of the turbine 10, corresponding to the rotation axis of the blade support frame 3, and the axis X₂ of the pin 52, corresponding to the rotation axis of the blade control frame 5.

With reference to Figures 2 to 9, the operation of the vertical axis wind turbine 10, described above with reference to Figure 1, is now described.

It is assumed, by way of example, that the wind blows in the direction indicated by the arrows in Figures 3, 5, 7 and 9. In this case, the directional deflector 54 angles toward the direction of the wind flow and thereby fixes, in an absolute reference system corresponding to the plane of the page, the position of the pin 52 of the blade control frame 5 with respect to the position of the shaft 2 of the turbine 10. Said position of the pin 52 with respect to the shaft 2 is such that, during rotation of the turbine 10, the blade control frame 5 is always in the position of maximum efficiency, namely with the blade exposed in the direction of the wind flow in the maximum opening position, so as to receive maximum thrust, and the other blades are in the intermediate opening or maximum closing position, so as to oppose minimum resistance to the wind flow. It follows that the torsional moment is always greater than the resisting moment, with consequent increase in the efficiency of the turbine 10.

As can be seen in Figures 3, 5, 7 and 9, the terminal or radially outermost ends of the rods 312 and 322, respectively, of the lower rod structure 31 and of the upper rod structure 32 of the blade support frame 3 rotate following an external circular trajectory T, with centre on the axis X₁ of the shaft 2; the fixed rods 43 of the blades 4a, 4b, 4c, since they are mounted between the lower 31 and upper 32 rod structures of the blade support frame 3, rotate following an internal circular trajectory T_{F} concentric to the external circular trajectory T.

The mobile rods 44 of the blades 4a, 4b, 4c, having their terminal end associated with the respective connecting rod 53 of the blade control frame 5, rotate following a circular trajectory T_{M} with centre on the axis X₂ of the pin 52 and interposed between the external circular trajectory T and the internal circular trajectory T_{F}. Since the pin 52 is offset with respect to the shaft 2 of the turbine 10, the circular trajectory T_{M}, according to which the mobile rods 44 of the blades 4a, 4b, 4c rotate, is eccentric with respect to the trajectories T and T_{F}. It follows that, as the mobile rods 44 move along the circular trajectory T_{M}, and therefore depending on the angular position of the connecting rods 53, the cursors 45, 46 of each mobile rod 44 slide in the respective guides 47, 48 so that the mobile rod 44 moves nearer to/away from the respective fixed rod 43.

The movement of the mobile rod 44 nearer to the fixed rod 43 causes the half-blades 41, 42 to move gradually nearer, until complete closure of the blade 4a, 4b, 4c, which therefore opposes minimum resistance to the wind flow. Otherwise, the movement of the mobile rod 44 away from the fixed rod 43 causes the half-blades 41, 42 to move gradually away until complete opening of the blade 4a, 4b, 4c, which therefore opposes maximum resistance to the wind flow.

In a first operating condition of the turbine 10, shown in Figures 2 and 3, the mobile rod 44 of the blade 4a, which is the blade exposed to the direction of the wind flow, is at the point of the circular trajectory T_{M} nearest the external circular trajectory T, so that it is in a maximum opening position of the half-blades 41 and 42. The blade 4b is upstream of the point of the trajectory T_{M} farthest from the external trajectory T, with respect to the rotation direction indicated by the arrow F in Figure 3, with the respective mobile rod 44 approaching the fixed rod 43 and the half-blades 41 and 42 in an intermediate opening position, approaching the maximum closing position. The blade 4c is positioned downstream of the point of the trajectory T_{M} farthest from the external trajectory T, with respect to the rotation direction of the turbine 10 indicated by the arrow F, with the respective mobile rod 44 moving away from the fixed rod 43 and the half-blades 41 and 42 in an intermediate opening position, approaching the maximum opening position.

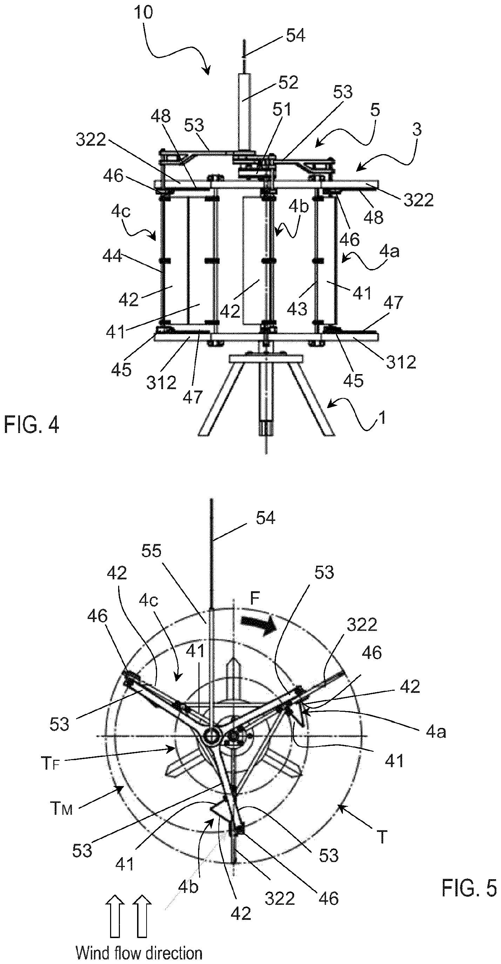

In a second operating condition of the turbine 10, shown in Figures 4 and 5, the blade 4a is upstream of the point of the trajectory T_{M} farthest from the external trajectory T, with respect to the rotation direction indicated by the arrow F in Figure 3, with the respective mobile rod 44 approaching the fixed rod 43 and the half-blades 41 and 42 in an intermediate opening position, approaching the maximum closing position. The blade 4b is positioned downstream of the point of the trajectory T_{M} farthest from the external trajectory T, with respect to the rotation direction indicated by the arrow F, with the respective mobile rod 44 moving away from the fixed rod 43 and the half-blades 41 and 42 in an intermediate opening position, approaching the maximum opening position. The blade 4c is downstream of the point of the trajectory T_{M} nearest the external trajectory T, with respect to the rotation direction indicated by the arrow F, with the respective mobile rod 44 approaching the fixed rod 43 and the half-blades 41, 42 in an intermediate opening position, approaching the maximum closing position.

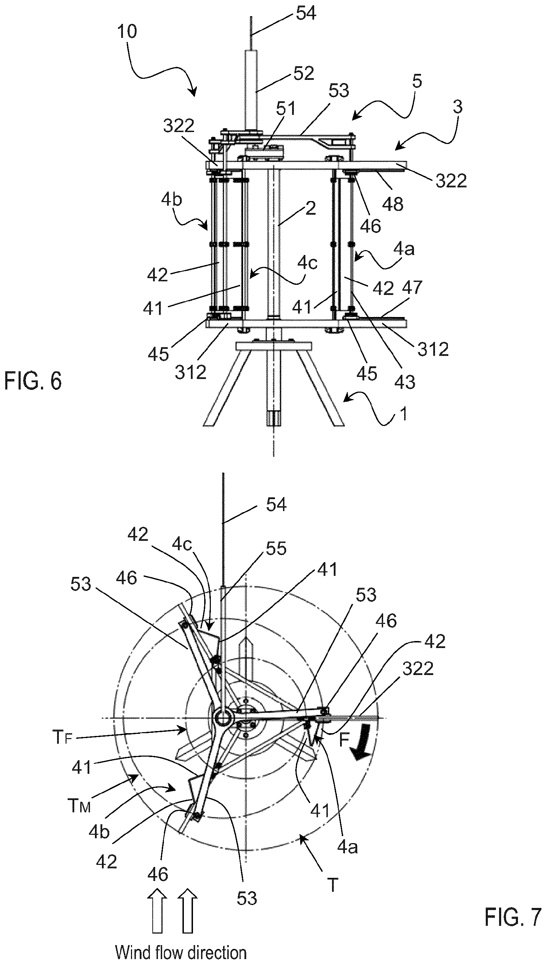

In a third operating condition of the turbine 10, shown in Figures 6 and 7, the mobile rod 44 of the blade 4a is at the point of the circular trajectory T_{M} farthest from the external circular trajectory T, so that it is in the maximum closing position of the half-blades 41 and 42. The blade 4b is upstream of the point of the trajectory T_{M} nearest the external trajectory T, with respect to the rotation direction indicated by the arrow F in Figure 7, with the respective mobile rod 44 moving away from the fixed rod 43 and the half-blades 41 and 42 in an intermediate opening position, approaching the maximum opening position. The blade 4c is positioned downstream of the point of the trajectory T_{M} nearest the external trajectory T, with respect to the rotation direction of the turbine 10 indicated by the arrow F, with the respective mobile rod 44 approaching the fixed rod 43 and the half-blades 41 and 42 in an intermediate opening position, approaching the maximum closing position.

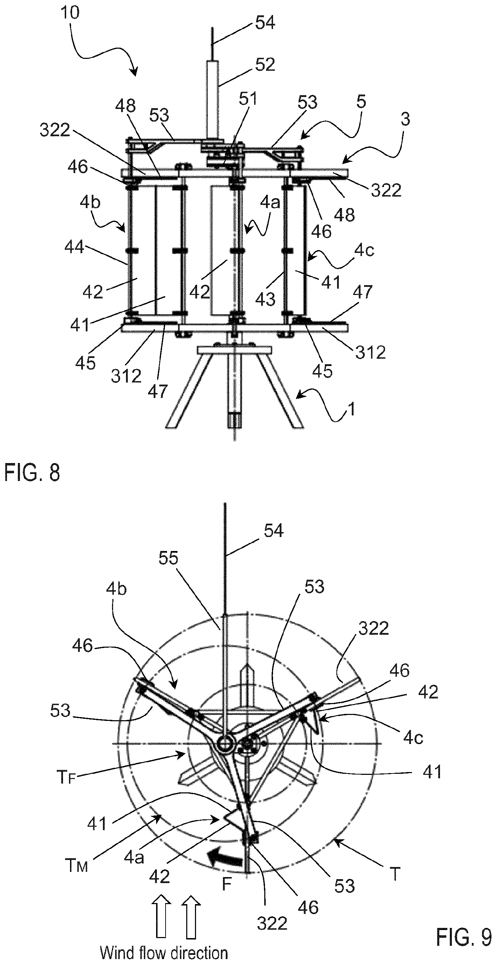

In a fourth operating condition of the turbine 10, shown in Figures 8 and 9, the blade 4a is upstream of the point of the trajectory T_{M} nearest the external trajectory T, with respect to the rotation direction indicated by the arrow F in Figure 9, with the respective mobile rod 44 moving away from the fixed rod 43 and the half-blades 41 and 42 in an intermediate opening position, approaching the maximum opening position. The blade 4b is positioned downstream of the point of the trajectory T_{M} nearest the external trajectory T, with respect to the rotation direction indicated by the arrow F, with the respective mobile rod 44 approaching the fixed rod 43 and the half-blades 41 and 42 in an intermediate opening position, approaching the maximum closing position. The blade 4c is upstream of the point of the trajectory T_{M} farthest from the external trajectory T, with respect to the rotation direction indicated by the arrow F, with the respective mobile rod 44 approaching the fixed rod 43 and the half-blades 41, 42 in an intermediate opening position, approaching the maximum closing position.

In the case of variation in the wind flow, the turbine 10 according to the invention is able to self-align according to the new wind direction, so that the blade control frame 5 is always in the position of maximum efficiency.

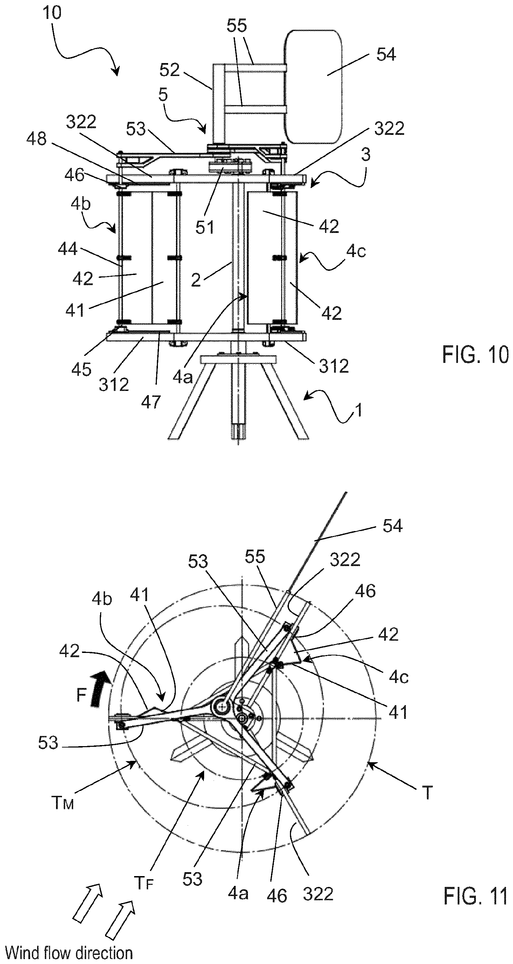

It is assumed, by way of example, that the wind flow direction varies with respect to the one shown in Figures 2 to 9. This condition is shown in Figures 10 and 11.

As the wind flow direction varies, the directional deflector 54 modifies its position and, consequently, fixes a new position of the pin 52 of the blade control frame 5 with respect to the position of the shaft 2 of the turbine 10. In fact, comparing Figure 11 for example with Figure 3, it can be seen that the pin 52 of the blade control frame 5, instead of being aligned horizontally with the shaft 2 of the turbine 10, is higher than the shaft 2.

In this way, the blade control frame 5 is again in the position of maximum efficiency, namely with the blade exposed in the direction of the wind flow in the maximum opening position, so as to receive maximum thrust, and the other blades in the intermediate opening or maximum closing position, so as to oppose minimum resistance to the wind flow. It follows that, also in this different position of the directional deflector 54, and of the blade control frame 5, the torsional moment is greater than the resisting moment, with consequent increase in the efficiency of the turbine 10.

From the above description the characteristics of the vertical axis wind turbine of the present invention are evident, and likewise the relative advantages thereof.

The scope of protection is defined by the appended claims.

## Claims

1. Vertical axis wind turbine (10) comprising a support base (1), a shaft (2) extending centrally from the support base (1), a support frame (3) for a plurality of blades (4a, 4b, 4c), mounted on the base (1) rotatable with the shaft (2), and a control frame (5) for the plurality of blades (4a, 4b, 4c), mounted on the shaft (2), above the blade support frame (3);
wherein each blade of the plurality of blades (4a, 4b, 4c) comprises a first half-blade (41) and a second half-blade (42) supported by the blade support frame (3);
**characterized in that** the blade control frame (5) comprises a control element (51) mounted rotatably on the shaft (2), a pin (52), extending from the control element (51) in an eccentric position with respect to the shaft (2), a plurality of connecting rods (53), one for each blade (4a, 4b, 4c), rotatably supported by the pin (52) and a directional deflector (54) extending from the pin (52) and rotatable integrally with it;
and **in that** each blade (4a, 4b, 4c) comprises a fixed rod (43) associated with the blade support frame (3) and a mobile rod (44) having an end sliding on the blade support frame (3) and another end associated with a respective connecting rod (53) of the blade control frame (5);
wherein, during the rotation of the turbine (10), the directional deflector (54) angles toward the direction of the wind flow, thereby fixing an angular position of the pin (52) with respect to the shaft (2) and the mobile rod (44) of each blade (4a, 4b, 4c) rotates following a trajectory (T_{M}), eccentric with respect to a trajectory (T_{F}) of the fixed rod (43), sliding on the blade support frame (3) and thus causing the opening and closing of the blades (4a, 4b, 4c).

2. Turbine (10) according to claim 1, wherein the first half-blade (41) and the secondo half-blade (42) of each blade (4a, 4b, 4c) are juxtaposed between each other, the first half-blade (41) being radially internal and the second half-blade (42) being radially external.

3. Turbine (10) according to claim 1 or 2, wherein the blade support frame (3) comprises a lower rod structure (31) and an upper rod structure (32) identical to each other, wherein the lower rod structure (31) is mounted on the shaft (2) near the base (1) and the upper rod structure (32) is mounted at a free end of the shaft (2), with homologous parts facing each other.

4. Turbine (10) according to claim 3, wherein the lower rod structure (31) comprises a hub (311), which is keyed onto the shaft (2) and from which rods (312) extend, connected to one another by reinforcing rods (313), and the upper rod structure (32) comprises a hub (321), which is keyed onto the shaft (2) and from which rods (322) extend, connected to one another by reinforcing rods (323).

5. Turbine (10) according to claim 3 or 4, wherein the fixed rod (43) is fixed to the first half-blade (41) of each blade (4a, 4b, 4c) at a lateral surface opposite to that of juxtaposition with the second half-blade (42), while the mobile rod (44) is fixed to the second half-blade (42) at a lateral surface opposite to that of juxtaposition with the first half-blade (41).

6. Turbine (10) according to any one of claims 3 to 5, wherein the fixed rod (43) of each blade (4a, 4b, 4c) has a lower end rotatably mounted on the lower rod structure (31) of the blade support frame (3) and an upper end rotatably mounted on the upper rod structure (32) of the blade support frame (3).

7. Turbine (10) according to any one of claims 3 to 6, wherein the mobile rod (44) of each blade (4a, 4b, 4c) has a lower end provided with a carriage (45) sliding into a guide ( 47) formed in the lower rod structure (31) of the blade support frame (3), the other end rotatably mounted at an end of the respective connecting rod (53) of the blade control frame (5) and carries a further carriage (46) sliding into a guide (48) formed in the upper rod structure (32) of the blade support frame (3).

8. Turbine (10) according to any one of the preceding claims, wherein the plurality of blades comprises three blades (4a, 4b, 4c) arranged at substantially 120° from one another.

9. Turbine (10) according to any one of the preceding claims, wherein the trajectory (T_{F}) followed by the fixed rods (43) of the blades (4a, 4b, 4c) is concentric to a trajectory (T) followed by radially outermost portions of the lower rod structure (31) and the upper rod structure (32) of the blade support frame (3).

10. Turbine (10) according to claim 9, wherein the trajectories (T, T_{F}, T_{M}) are circular.

## Patentansprüche

1. Windkraftanlage mit vertikaler Achse (10), umfassend eine Trägerbasis (1), eine Welle (2), die sich mittig aus der Trägerbasis (1) erstreckt, einen Trägerrahmen (3) für eine Vielzahl von Blättern (4a, 4b, 4c), der auf der Basis (1) drehbar mit der Welle (2) montiert ist, und einen Steuerrahmen (5) für die Vielzahl von Blättern (4a, 4b, 4c) an der Welle (2), der oberhalb des Blatt-Trägerrahmens (3) montiert ist;
wobei jedes Blatt der Vielzahl von Blättern (4a, 4b, 4c) ein erstes Halbblatt (41) und ein zweites Halbblatt (42) umfasst, die vom Blatt-Trägerrahmen (3) getragen werden; **dadurch gekennzeichnet, dass** der Blatt-Steuerrahmen (5) ein drehbar auf der Welle (2) montiertes Steuerelement (51), einen Stift (52), der sich aus dem Steuerelement (51) in einer exzentrischen Position in Bezug auf die Welle (2) erstreckt, eine Vielzahl von Verbindungsstangen (53), eine für jedes Blatt (4a, 4b, 4c), die drehbar von dem Stift (52) getragen werden, und einen gerichteten Abweiser (54), der sich aus dem Stift (52) erstreckt, und damit vollständig drehbar ist, umfasst;
und dadurch, dass jedes Blatt (4a, 4b, 4c) eine feste Stange (43) umfasst, die dem Blatt-Trägerrahmen (3) zugeordnet ist, und eine bewegliche Stange (44), die ein Ende aufweist, das auf dem Blatt-Trägerrahmen (3) gleitet, und ein anderes Ende, das einer jeweiligen Verbindungsstange (53) des Blatt-Steuerrahmens (5) zugeordnet ist;
wobei sich der gerichtete Abweiser (54) während der Drehung der Kraftanlage (10) in die Richtung der Windströmung neigt, wodurch eine Winkelposition des Stifts (52) in Bezug auf die Welle (2) fixiert wird, und sich die bewegliche Stange (44) jedes Blattes (4a, 4b, 4c) einer Bewegungsbahn (T_{M}), exzentrisch in Bezug auf eine Bewegungsbahn (T_{F}) der festen Stange (43) folgend auf dem Blatt-Trägerrahmen (3) gleitend dreht, und dadurch das Öffnen und Schließen der Blätter (4a, 4b, 4c) veranlasst.

2. Kraftanlage (10) nach Anspruch 1, wobei das erste Halbblatt (41) und das zweite Halbblatt (42) jedes Blattes (4a, 4b, 4c) nebeneinander angeordnet sind, wobei das erste Halbblatt (41) radial innen liegt, und das zweite Halbblatt (42) radial außen liegt.

3. Kraftanlage (10) nach Anspruch 1 oder 2, wobei der Blatt-Trägerrahmen (3) eine untere Stangenstruktur (31) und eine obere Stangenstruktur (32) umfasst, die zueinander identisch sind, wobei die untere Stangenstruktur (31) an der Welle (2) in der Nähe der Basis (1) montiert ist, und die obere Stangenstruktur (32) an einem freien Ende der Welle (2) montiert ist, wobei übereinstimmende Teile einander zugewandt sind.

4. Kraftanlage (10) nach Anspruch 3, wobei die untere Stangenstruktur (31) eine Nabe (311) umfasst, die auf der Welle (2) verkeilt ist, und aus der sich Stangen (312) erstrecken, die durch Verstärkungsstangen (313) miteinander verbunden sind, und die obere Stangenstruktur (32) eine Nabe (321) umfasst, die auf der Welle (2) verkeilt ist, und aus der sich Stangen (322) erstrecken, die durch Verstärkungsstangen (323) miteinander verbunden sind.

5. Kraftanlage (10) nach Anspruch 3 oder 4, wobei die feste Stange (43) an dem ersten Halbblatt (41) jedes Blattes (4a, 4b, 4c) an einer Seitenfläche gegenüber jener einer Nebeneinanderstellung mit dem zweiten Halbblatt (42) befestigt ist, während die bewegliche Stange (44) an dem zweiten Halbblatt (42) an einer Seitenfläche gegenüber jener einer Nebeneinanderstellung mit dem ersten Halbblatt (41) befestigt ist.

6. Kraftanlage (10) nach einem der Ansprüche 3 bis 5, wobei die feste Stange (43) jedes Blattes (4a, 4b, 4c) ein unteres Ende aufweist, das drehbar an der unteren Stangenstruktur (31) des Blatt-Trägerrahmens (3) montiert ist, und ein oberes Ende, das drehbar an der oberen Stangenstruktur (32) des Blatt-Trägerrahmens (3) montiert ist.

7. Kraftanlage (10) nach einem der Ansprüche 3 bis 6, wobei die bewegliche Stange (44) jedes Blattes (4a, 4b, 4c) ein unteres Ende aufweist, das mit einem Schlitten (45) versehen ist, der in einer Führung (47) gleitet, die in der unteren Stangenstruktur (31) des Blatt-Trägerrahmens (3) gebildet ist, das andere Ende drehbar an einem Ende der jeweiligen Verbindungsstange (53) des Blatt-Steuerrahmens (5) montiert ist, und einen weiteren Schlitten (46) in eine Führung (48) gleitend führt, die in der oberen Stangenstruktur (32) des Blatt-Trägerrahmens (3) gebildet ist.

8. Kraftanlage (10) nach einem der vorstehenden Ansprüche, wobei die Vielzahl von Blättern drei Blätter (4a, 4b, 4c) umfasst, die im Wesentlichen 120° zueinander angeordnet sind.

9. Kraftanlage (10) nach einem der vorstehenden Ansprüche, wobei die Bewegungsbahn (T_{F}), der die festen Stangen (43) der Blätter (4a, 4b, 4c) folgen, konzentrisch zu einer Bewegungsbahn (T) ist, der radial äußerste Abschnitte der unteren Stangenstruktur (31) und der oberen Stangenstruktur (32) des Blatt-Trägerrahmens (3) folgen.

10. Kraftanlage (10) nach Anspruch 9, wobei die Bewegungsbahnen (T, T_{F}, T_{M}) kreisförmig sind.

## Revendications

1. Éolienne à axe vertical (10) comprenant une base de support (1), un arbre (2) s'étendant de manière centrale à partir de la base de support (1), un cadre de support (3) pour une pluralité de pales (4a, 4b, 4c), monté sur la base (1) pouvant tourner avec l'arbre (2), et un cadre de commande (5) pour la pluralité de pales (4a, 4b, 4c), monté sur l'arbre (2), au-dessus du cadre de support de pales (3) ;
dans laquelle chaque pale de la pluralité de pales (4a, 4b, 4c) comprend une première demi-pale (41) et une seconde demi-pale (42) supportées par le cadre de support de pales (3) ;
**caractérisée en ce que** le cadre de commande de pales (5) comprend un élément de commande (51) monté de manière rotative sur l'arbre (2), une goupille (52), s'étendant à partir de l'élément de commande (51) dans une position excentrique par rapport à l'arbre (2), une pluralité de bielles (53), une pour chaque pale (4a, 4b, 4c), supportées de manière rotative par la goupille (52) et un déflecteur directionnel (54) s'étendant à partir de la goupille (52) et pouvant tourner d'un seul tenant avec elle ;
et **en ce que** chaque pale (4a, 4b, 4c) comprend une tige fixe (43) associée au cadre de support de pales (3) et une tige mobile (44) présentant une extrémité glissant sur le cadre de support de pales (3) et une autre extrémité associée à une bielle respective (53) du cadre de commande de pales (5) ;
dans laquelle, lors de la rotation de l'éolienne (10), le déflecteur directionnel (54) s'incline vers la direction de la circulation du vent, fixant ainsi une position angulaire de la goupille (52) par rapport à l'arbre (2) et la tige mobile (44) de chaque pale (4a, 4b, 4c) tourne en suivant une trajectoire (T_{M}), excentrique par rapport à une trajectoire (T_{F}) de la tige fixe (43), glissant sur le cadre de support de pales (3) et provoquant ainsi l'ouverture et la fermeture des pales (4a, 4b, 4c).

2. Éolienne (10) selon la revendication 1, dans laquelle la première demi-pale (41) et la seconde demi-pale (42) de chaque pale (4a, 4b, 4c) sont juxtaposées l'une à l'autre, la première demi-pale (41) étant radialement interne et la seconde demi-pale (42) étant radialement externe.

3. Éolienne (10) selon la revendication 1 ou 2, dans laquelle le cadre de support de pales (3) comprend une structure de tige inférieure (31) et une structure de tige supérieure (32) identiques l'une à l'autre, dans laquelle la structure de tige inférieure (31) est montée sur l'arbre (2) près de la base (1) et la structure de tige supérieure (32) est montée au niveau d'une extrémité libre de l'arbre (2), des parties homologues se faisant face l'une à l'autre.

4. Éolienne (10) selon la revendication 3, dans laquelle la structure de tige inférieure (31) comprend un moyeu (311), qui est claveté sur l'arbre (2) et à partir duquel s'étendent des tiges (312), reliées les unes aux autres par des tiges de renfort (313), et la structure de tige supérieure (32) comprend un moyeu (321), qui est claveté sur l'arbre (2) et à partir duquel s'étendent des tiges (322), reliées les unes aux autres par des tiges de renfort (323).

5. Éolienne (10) selon la revendication 3 ou 4, dans laquelle la tige fixe (43) est fixée à la première demi-pale (41) de chaque pale (4a, 4b, 4c) au niveau d'une surface latérale opposée à celle de la juxtaposition à la seconde demi-pale (42), tandis que la tige mobile (44) est fixée à la seconde demi-pale (42) au niveau d'une surface latérale opposée à celle de la juxtaposition à la première demi-pale (41).

6. Éolienne (10) selon l'une quelconque des revendications 3 à 5, dans laquelle la tige fixe (43) de chaque pale (4a, 4b, 4c) présente une extrémité inférieure montée de manière rotative sur la structure de tige inférieure (31) du cadre de support de pales (3) et une extrémité supérieure montée de manière rotative sur la structure de tige supérieure (32) du cadre de support de pales (3).

7. Éolienne (10) selon l'une quelconque des revendications 3 à 6, dans laquelle la tige mobile (44) de chaque pale (4a, 4b, 4c) présente une extrémité inférieure munie d'un chariot (45) glissant dans un guide (47) formé dans la structure de tige inférieure (31) du cadre de support de pales (3), l'autre extrémité est montée de manière rotative au niveau d'une extrémité de la bielle respective (53) du cadre de commande de pales (5) et porte un autre chariot (46) glissant dans un guide (48) formé dans la structure de tige supérieure (32) du cadre de support de pales (3).

8. Éolienne (10) selon l'une quelconque des revendications précédentes, dans laquelle la pluralité de pales comprend trois pales (4a, 4b, 4c) agencées sensiblement à 120° les unes des autres.

9. Éolienne (10) selon l'une quelconque des revendications précédentes, dans laquelle la trajectoire (T_{F}) suivie par les tiges fixes (43) des pales (4a, 4b, 4c) est concentrique avec une trajectoire (T) suivie par des parties radialement les plus éloignées de la structure de tige inférieure (31) et de la structure de tige supérieure (32) du cadre de support de pales (3).

10. Éolienne (10) selon la revendication 9, dans laquelle les trajectoires (T, T_{F}, T_{M}) sont circulaires.
